# EUROPEAN PATENT APPLICATION

(11) **EP 2 019 362 A2**
(43) Date of publication of application: **28.01.2009**
(21) Application number: 08275037.3
(22) Date of filing: 22.07.2008
(51) Int. Cl.: G06F 17/30

(54) **Spatial data validation systems**

(30) Priority: 23.07.2007 GB 0714321
(71) Applicant: 1Spatial Group Limited, 6 Cambridge Business Park Cambridge Cambridgeshire CB4 0WZ (GB)
(72) Inventor: Rasheed, Dean, Cambridge, Cambridgeshire CB4 0WZ (GB)
(74) Representative: Martin, Philip John

(57) **Abstract**

The present invention relates to spatial data validation systems, in particular to systems and methods for enabling a user to validate data in a database of geometric objects defining spatial data. We describe a system to enable a user to validate data in a database of geometric objects defining spatial data, the system comprising: an interface for said database of geometric objects; a data store storing a data schema, executing rules of said data schema defining allowed formats for a rule tree having a set of nodes defining a rule; and a graphical user interface (GUI) to enable a user to build one or more said rules for operating on said database of geometric objects by displaying a graphical representation of said rule tree.

## Description

The present invention relates to spatial data validation systems, in particular to systems and methods for enabling a user to validate data in a database of geometric objects defining spatial data.

Our society has gathered vast quantities of geospatial data over the years, often spending large sums of money in order to derive the information we need to make business critical decisions. Much of this data collection has been done in isolation, resulting in costly duplication and data that is inconsistent or poorly documented. Huge amounts of data are accumulated in disparate and proprietary formats resulting in single-purpose, high maintenance data silos that no one else within the organisation can access. All too often, organisations who rely on spatial data for decision making find that the relevant data is only partially available because they cannot find what they need, they have no way of accessing all of it, or that data belonging to a third party is not suitable for their needs. This leads to decision-making being a slow, error-prone and typically manual process based upon partial information.

We will describe:
- The ability to window into scattered spatial data to be able to assess the data to establish its fitness for purpose and facilitate its re-use.
- Data mining techniques to analyse data and identify statistically dominant patterns. Users can then determine whether the patterns that have been identified are indeed valid business rules and then have the ability to fine-tune them.
- Rules stored as enterprise metadata in an open, portable knowledge base. Rules are created as conceptual models and "detached" from any physical data model (ontology creation). Users from different parts of an organisation collaborate in evolving and maintaining the rule base.
- Reporting tools to identify non-conforming data. Minimisation of risk by ensuring data adheres to regulatory or in-house compliance rules (SLAs, ISO9000) or performance measurement (e.g. Balanced Scorecard) and therefore able to "certify" data.
- An interoperable service oriented architecture (SOA) delivered through the implementation of standards (ISO19119).
- Spatial rules engine to automatically fix-up non-conforming objects.
- Persistent quality metadata recording the results of conformance checks in standards-compliant form (ISO19115).
- Extensibility: the ability to extend the system with additional built-in functions, operators etc through Java programming using the system API.

According to an aspect of the present invention there is provided a system to enable a user to validate data in a database of geometric objects defining spatial data, the system comprising: an interface for said database of geometric objects; a data store storing a data schema, executing rules of said data schema defining allowed formats for a rule tree having a set of nodes defining a rule; and a graphical user interface (GUI) to enable a user to build one or more said rules for operating on said database of geometric objects by displaying a graphical representation of said rule tree.

According to another aspect of the present invention there is provided a method of building a rule for filtering a dataset of spatial objects in a spatial object database, each spatial object having one or more attributes and a value associated with each attribute, said rule comprising a tree of nodes comprising value nodes, relation nodes and predicate nodes, the method comprising: selecting a root node from a root node menu, said root node comprising a predicate node identifying a dataset of spatial objects within said database for said rule to operate on; selecting a predicate node from a predicate node menu, said predicate node defining a condition for testing against each spatial object of said dataset to filter said dataset; and selecting one or more of value nodes, relation nodes and further predicate nodes from node menus to define values of said attributes, relations between values and/or further conditions for said testing according to rule semantics.

According to a further aspect of the present invention there is provided a method of building an action for modifying a dataset of spatial objects in a database of spatial objects, each spatial object having one or more attributes and a value associated with each attribute, said action comprising a tree of nodes comprising value nodes, relation nodes, predicate nodes and operation nodes, the method comprising: selecting a root node from a root node menu, said root node comprising a predicate node identifying a dataset of spatial objects within said database for said modifying to operate within; selecting a predicate node from a predicate node menu, said predicate node defining a condition for testing against each spatial object of said dataset to filter said dataset; selecting one or more of value nodes, relation nodes and further predicate nodes from node menus to define values of said attributes, relations between values and/or further conditions for said testing according to rule semantics; and selecting an operation node from an operation node menu, said operation node defining a target attribute of each spatial object and a modification value for said target attribute, for modifying said dataset of spatial objects.

According to a yet further aspect of the present invention there is provided a user interface for building a rule operable on a database of spatial objects, said rule having a tree structure comprising a root node and one or more child nodes, said user interface comprising: a first menu for selecting a root node of said rule corresponding to a dataset of spatial objects within said database; a second menu for selecting a predicate node from a plurality of predicate nodes operable on a selected root node; and means for providing further menus for selecting child nodes responsive to nodes already selected in accordance with rule semantics.

The invention further provides processor control code to implement the above-described methods, for example on a general purpose computer system or on a digital signal processor (DSP). The code may be provided on a carrier such as a disk, CD- or DVD-ROM, programmed memory such as read-only memory (Firmware), or on a data carrier such as an optical or electrical signal carrier. Code (and/or data) to implement embodiments of the invention may comprise source, object or executable code in a conventional programming language (interpreted or compiled) such as C, or assembly code. The above described methods may also be implemented, for example, on an FPGA (field programmable gate array) or in an ASIC (application specific integrated circuit). Thus the code may also comprise code for setting up or controlling an ASIC or FPGA, or code for a hardware description language such as Verilog (Trade Mark), VHDL (Very high speed integrated circuit Hardware Description Language), or RTL code or SystemC. Typically dedicated hardware is described using code such as RTL (register transfer level code) or, at a higher level, using a language such as C. As the skilled person will appreciate such code and/or data may be distributed between a plurality of coupled components in communication with one another.

Features of the above described aspects of the invention may be combined in any combination.

These and other aspects of the invention will now be described in further detail, with reference to the accompanying drawings, in which:
Figure 1 shows a user interface of a system according to the present invention running in the Internet Explorer web browser.
Figure 2 shows a Input Mapping interface in a system according to the present invention.
Figure 3 shows a Rule Builder interface in a system according to the present invention.
Figure 4 shows a Rule Discovery interface in a system according to the present invention.
Figure 5 shows an Action Builder interface in a system according to the present invention.
Figure 6 shows an Action Maps interface in a system according to the present invention.
Figure 7 shows a Sessions interface in a system according to the present invention.
Figure 8 shows the system architecture of a system according to the present invention.

We describe a number of concepts used in an exemplary system according to the present invention:

An action is a procedure or process to be applied to one or more objects; usually when they are found to violate a particular rule. For example an action could modify a geometry or attribute in order to fix it (a fix-up action).

A data store is an external source of data (expected to be geographic data). This may be an Oracle Spatial database. Additional types of enterprise data source are also supported, such as an OGC WFS. Rules are applied to data drawn from one or more data stores.

Discovery is the process of analysing data from a data source, looking for patterns in it, and using statistical techniques to deduce a plausible set of rules that the data appears to satisfy.

Discovery - or spatial data mining - is an important part of building a spatial knowledge base. Combined with information from published specifications and knowledge from specific individuals, it may be able to find rules that would otherwise have been omitted.

A folder is a logical grouping of rules or actions. The interface may mimic the Windows Explorer interface, using a tree of folders and sub-folders to store rules and actions.

Task is an abstraction referring to some process applied to data from a data store. Specific tasks performed may include: Open Data, Discover Rules, Check Rules, Apply Action, Apply Action Map, Commit Data, Copy to...

A task may take seconds, minutes, hours or days; therefore it executes asynchronously, so that the user can monitor progress and abort sessions. Tasks continue processing even if the user who started them logs out or shuts down the client computer. All status values and reports associated with the task are retained.

A session is a sequence of tasks that describe a workflow. For example, open data from one or more data sources, check conformance against selected rules, apply rule-based transformations to resolve problems and commit the changes to the original data source(s).

One or more conditions that objects from the data store should satisfy. A rule in this system may be a structured tree of hierarchical conditions, against which objects can be tested. Rules are expressed in a form independent of the schema of any particular data store. This means they can easily be re-used with different data sources.

In some rules-based systems, the term "rule" refers to a fact-pattern-action triplet: the data itself, the conditions it should satisfy, procedures to execute if it does not.

This system uses this "fact-pattern-action" paradigm. However, the term "rule" refers solely to the pattern part of such a rule. That is, the conditions that the data should satisfy. The action to be performed is selected independently of the pattern and may be simply a reporting action (in the web browser, to an XML file or to a message queue) or a reconciliation action that applies algorithms to correct a problem.

The term "action" refers to the procedures or processes to be applied to the data when the condition is not satisfied. Both rules and actions are defined using the GUI provided in the web interface or through other programmes using the web services API.

We will describe how data stores and schema mappings are used to connect to an external data repository.

A data store is an external repository for data, usually including a geographic component. This may be a set of login credentials for a particular Oracle database service. The user selects some or all of the data in the store. The system may check it for conformance to a defined set of rules and optionally applies automated corrections. The corrected data may be returned to the same data store or a different data store. Other types of data store may be supported (other databases and XML/GML data representations).

The schema mapping defines how data should be converted between the schema of a data store and the internal schema used by this system. It translates between relational database tables and columns, and classes and properties in the system workspace. The user selects which tables and columns to import and defines the names of the corresponding classes and properties.

It is possible to define several data stores that access the same Oracle data through different schema mappings. It is possible to read data from several data stores into the system for processing against a set of rules that analyse relationships between datasets as well as within a dataset.

Each data store has two schema mappings associated with it - one input and one output. Output mapping is not needed if you are only checking rules without changing data. It is also possible to input from one store and output to a different store.

The system may also provide integrated support for externally defined ontologies which describe the structure of the data in a specific data store. This is achieved by interfacing with the open source Jena ontology library (see http://jena.sourceforge.net/), allowing ontologies in various formats such as RDF and OWL to be read into the system.

We will describe how to discover new rules through analysis of existing data.

Rules may come from a variety of sources including formal and informal specifications, application and data model source code and the knowledge of experts within an organisation. A further potential source of rules is the data itself. Rule discovery in the system is the application of data mining techniques to spatial data. Sophisticated analysis of dominant statistical patterns in the data may identify rules that have never been formally recorded; in some cases they may never have been recognised. By identifying these rules, the system can be used to automatically extend the rule base, increasing confidence in the quality of the data and therefore increasing its value.

The main difference between data mining in non-spatial and spatial environments is that attributes of features that interact spatially or are nearby an obj ect of interest need to be considered. New techniques are needed for analysing the spatial relationships, such as topological, distance and direction relations. These relationships are considered, in addition to attribute relationships, to identify those relations sufficiently common to suggest they should always hold.

There are a number of different approaches and algorithms that can be used for spatial data mining. The rule discovery interface in this system may be generic, allowing different algorithms to be used to identify as wide a range of rules as possible.

The system may provide this environment by storing all metadata in an Oracle database and providing Internet-wide access through web browsers and web services.

The system may run in the Internet Explorer web browser, requiring no additional software to be installed on the client computer. A row of tabs at the top of the user interface selects the component to work with. Some parts of this interface may be inaccessible or read-only depending on the privileges of the user logged in to the system. For example, a Rule Definer may create, edit and delete rules and actions but a Data Engineer is allowed only to browse them and use them to maintain and execute tasks such as Check Rules as part of a Session. In this example, the Rules component is selected, allowing the user to maintain the rule base. The basic principles described here apply to all of the components; an example of each is shown later. The Rules are presented in a hierarchical folder structure, similar to that used by Windows Explorer.

We describe basic principles behind the user interface and the main components:

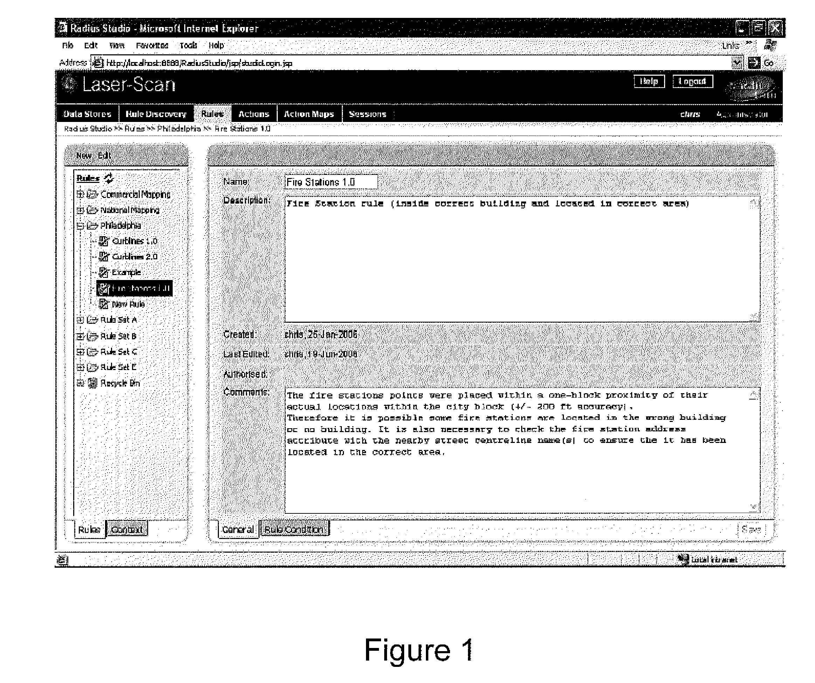

Figure 1 illustrates the user interface running in the Internet Explorer web browser, requiring no additional software to be installed on the client computer. A row of tabs at the top of the user interface selects the component to work with. Some parts of this interface may be inaccessible or read-only depending on the privileges of the user logged in to the system. For example, a Rule Definer may create, edit and delete rules and actions but a Data Engineer is allowed only to browse them and use them to maintain and execute tasks such as Check Rules as part of a Session. In this example, the Rules component is selected, allowing the user to maintain the rule base. The basic principles described here apply to all of the components; an example of each is shown later. The Rules are presented in a hierarchical folder structure, similar to that used by Windows Explorer. The path to the current folder appears below the main tabs, in this case:
Radius Studio >> Rules >> Philadelphia >> Fire_Stations 1.0
Philadelphia is the name of the folder and Fire_Stations 1.0 is the name of the selected rule. The main part of the window is divided into two areas. The form on the left is for creating, deleting and modifying rules and rule folders and for editing options that apply to all the rules. The form on the right is for browsing and editing the currently selected rule. Each of these forms provides tabs at the bottom that are used to view and edit different parts of this information. The left hand form displays all rules in the current folder and a list of deleted items in the recycle bin. Items in the recycle bin may be restored or permanently deleted.

The General tab on the right hand side maintains the metadata about the rule: a name for the rule, chosen by the user; a freeform text description of the rule; the date when the rule was created and the name of the user who created it, automatically maintained; the date when the rule was last modified and the name of the user who updated it, automatically maintained; the date when the rule was authorised and the name of the user who authorised it, automatically maintained; and other comments added by any user.

The Data Stores interface is used to define connections to Oracle databases that contain data to be processed by the system. Each data store contains the following information in addition to the standard metadata described in the previous section: Input Details - the information required to connect to the Oracle database and schema for an Open Data task; Input Mapping - a mapping from the relational schema in Oracle to the object-oriented schema in this system; Output Details - the information required to connect to the Oracle database and schema for a Copy To... task, often but not necessarily the same as the Input Details; Output Mapping - a mapping from the object-oriented schema in this system to the relational schema in Oracle, by default the inverse of the Input Mapping.

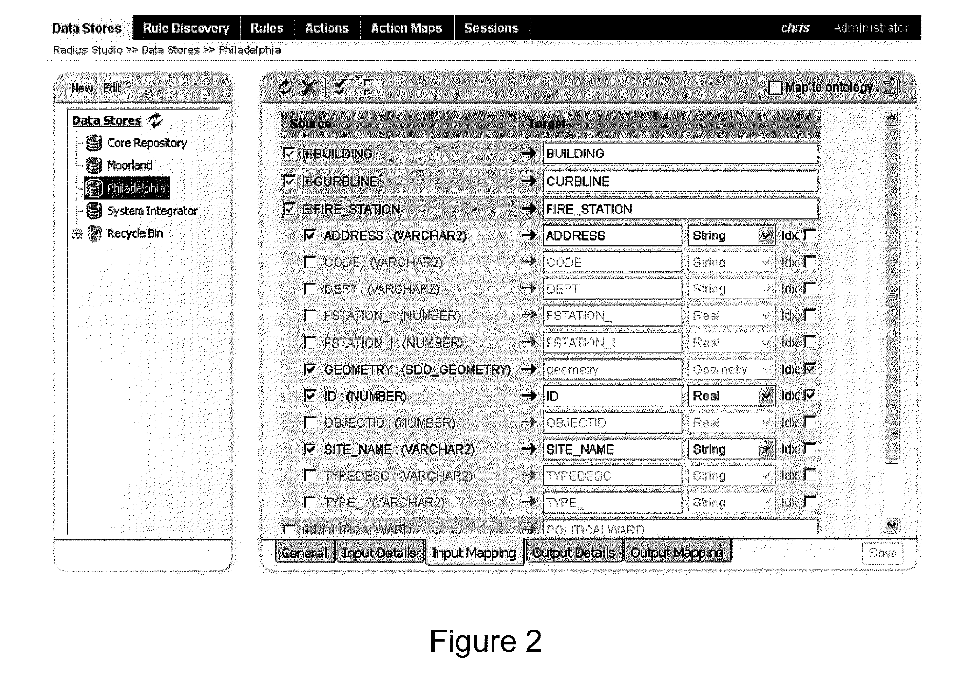

The example in Figure 2 illustrates the Input Mapping interface. The names such as BUILDING and CURBLINE refer to tables accessed through the input connection. The FIRE_STATION table has been expanded to show the columns in the table. The ticks on the left hand side are used to select which tables and which columns from each selected table are to be analysed by the system. All other data is ignored.

The text boxes on the right hand side map table names onto classes and column names onto properties in the system schema. The type of each property may also be overridden - for example to decide whether to represent a NUMBER as a real or an integer. By default, the interface is populated with an identity mapping.

The schema used by the system in a session is created as the union of all data stores from which data has been opened. Optionally, the schema may be defined by an ontology defined in the Web Ontology Language (OWL). In this case, the schema mapping interface allows the user to choose only from classes and properties defined in the ontology. This is done by selecting the checkbox. This then provides an interface allowing the physical data structures in the data store (eg. tables and columns in a relational database) to be mapped onto the abstract entities defined in the ontology (classes and properties). Once this mapping has been established, rules and actions may be defined in the system in terms of the entities defined in the ontology, and the data in the data store may be checked or processed using these rules or actions.

The system may provide full support for multiple inheritance defined in external ontologies, so rules and actions may refer to base classes in the ontology, and the system rules engine will automatically deduce the set of affected data classes to work with.

The Input and Output Details interface (not illustrated) requires the following information: Data Store Type (may be Oracle); Net service name; Oracle user name; and Password.

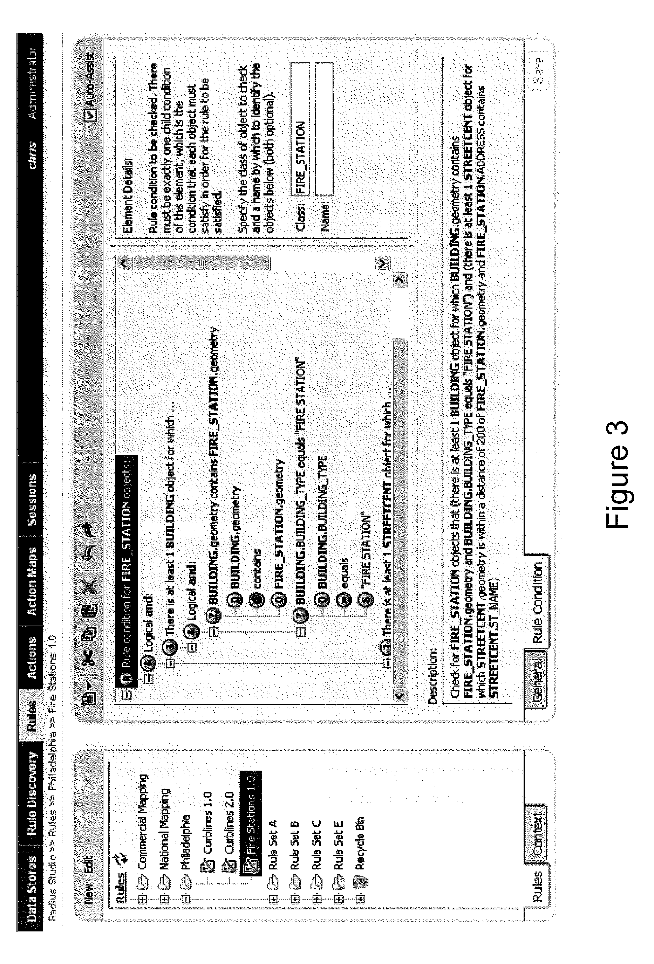

The Rule Builder (Figure 3) allows the definition of potentially complex rules with a sophisticated but easy to use interface. The rule is expressed as a series of clauses built up using pulldown menus from the bar immediately above the graphical illustration of the rule. The description at the bottom provides English text representing the currently selected clause; in this case the complete rule. The element details are used to specify the parameters associated with the currently selected rule. This part of the form always includes a description of the information required. In this case, the top-level rule specifies the class to be checked. An optional name is used when the rule needs to distinguish between two different features of the same class.

There are four types of rule clauses:
- Conditions, including comparisons, logical operators (and, or, not), if ... then ... else, existence and looping constructs.
- Values, including constants, dynamic values (attributes), built-in functions, aggregates, etc.
- Relationships, including equals, less than, begins with, contains, etc.
- Spatial relationships: the system may implement all of the Open Geospatial Consortium spatial operators: equal, disjoint, intersect, touch, overlaps, cross, within, contains and geometric relationships like within distance or beyond. Tooltips may be provided to clarify each of these operators, e.g. "Check that two objects touch one another:- The boundaries of the objects meet but their interiors do not meet and the boundary of one does not meet the interior of the other."

While editing a rule, it may temporarily be incomplete until a new clause is added or parameters are defined. These problems are highlighted clearly in red and a description of what is required displayed.

Multi-level undo/redo ensures it is easy to recover from mistakes while editing. Drag and drop can be used to reorder clauses of a rule. Cut and paste can be used to transfer all or part of a rule into another rule.

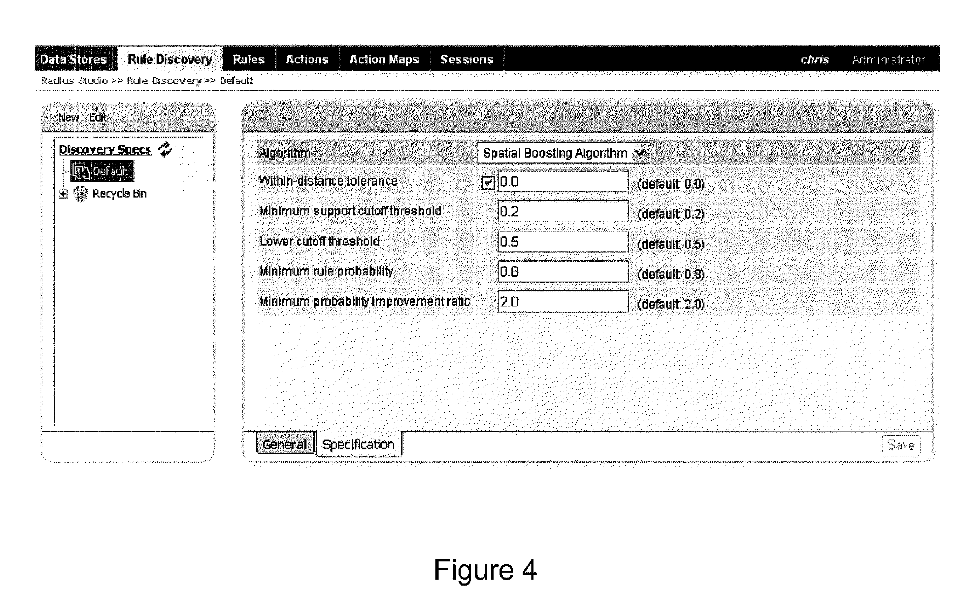

The Rule Discovery interface (Figure 4) is used to select a data mining algorithm and define parameters to control the discovery process. In one embodiment of the system; one algorithm is provided, which is a variant of the boosting algorithm.

The "within distance" tolerance may be used to consider features that are nearby, but do not interact with it. Any features that approach within this distance will be analysed. The other parameters are described in the online help; they require more knowledge of the algorithm than is appropriate to cover in this document and the default values are usually appropriate.

The Sessions interface is used to execute the discovery process based on a selected specification. This allows further parameters to be defined: a spatial region within which to analyse data; a restricted set of classes to analyse; and the maximum number of objects to consider.

The results from a rule discovery task are presented as a table of candidate rules and some statistics related to the confidence that the rule is correct. Any of these rules may be promoted to real rules that can be used in conformance checks and rule-based transformations. A single button click next to the rule will prompt for a name and then save the rule, after which it may be edited by the Rule Builder and/or selected for use in a session.

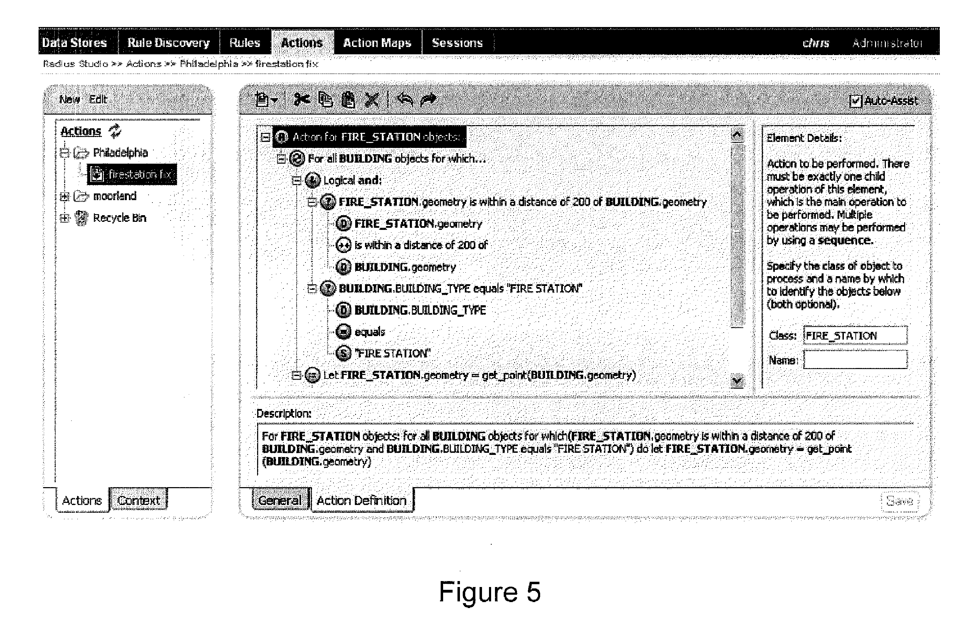

The Action Builder (Figure 5) uses the same style of interface as the Rule Builder, but provides extra operations such as the ability to change the values of object properties.

The description of a sample action is shown below:
For FIRE_STATION objects:
   for all BUILDING objects for which
   (FIRE_STATION. geometry is within a distance of 200 of BUILDING. geometry and
   BUILDING.BUILDING_TYPE equals "FIRE STATION") do
   let FIRE_STATION.geometry = get_point(BUILDING. geometry)

In the above example, get_point() is a built-in function. This is very common in actions, which can choose from a wide range of built-in functions, including:
Conversion: to_radians, to_degrees, to_integer, to_real, to_string
Mathematical, e,g, abs, min, max, sin, cos
Bit manipulation: bit_and, bit_or, bit_xor, bit_not, bit_shift
String functions, e.g.: substring, re_search, re_subs_all, to_uppercase, to_lowercase
Geometric, e.g.: area, buffer, convex_hull, difference, distance, douglas_peucker, intersection, outer_ring, remove_small_loops, remove_snapbacks, remove_spikes, union

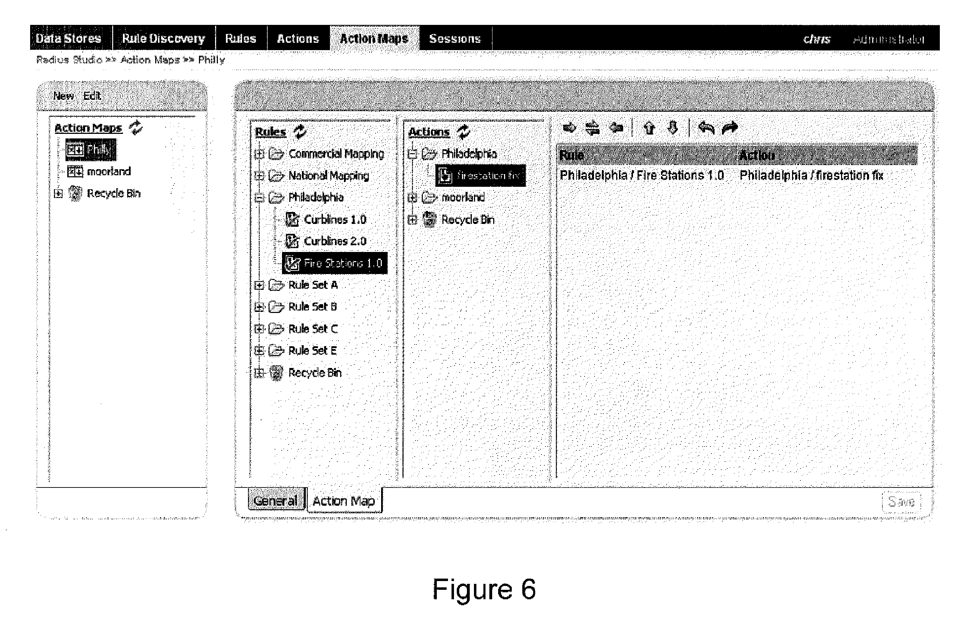

Action Maps (Figure 6) are used to connect rules to actions. The lists in the centre of the screen can be used to browse all folders of rules and actions to select an action to be invoked as part of a rule-based transformation whenever a feature is found that does not conform to the rule.

If the left hand side of the pair is left blank - so that no rule is specified - the action will be applied to all objects in the relevant class.

The action map is a simple table of rules and the corresponding action. It is easy to add more rows to the table and to change the data in existing rows. Multi-level undo / redo may be used to correct mistakes. In the Sessions Interface, the Apply Action Map task uses an action map to specify the rules to check and the actions to invoke.

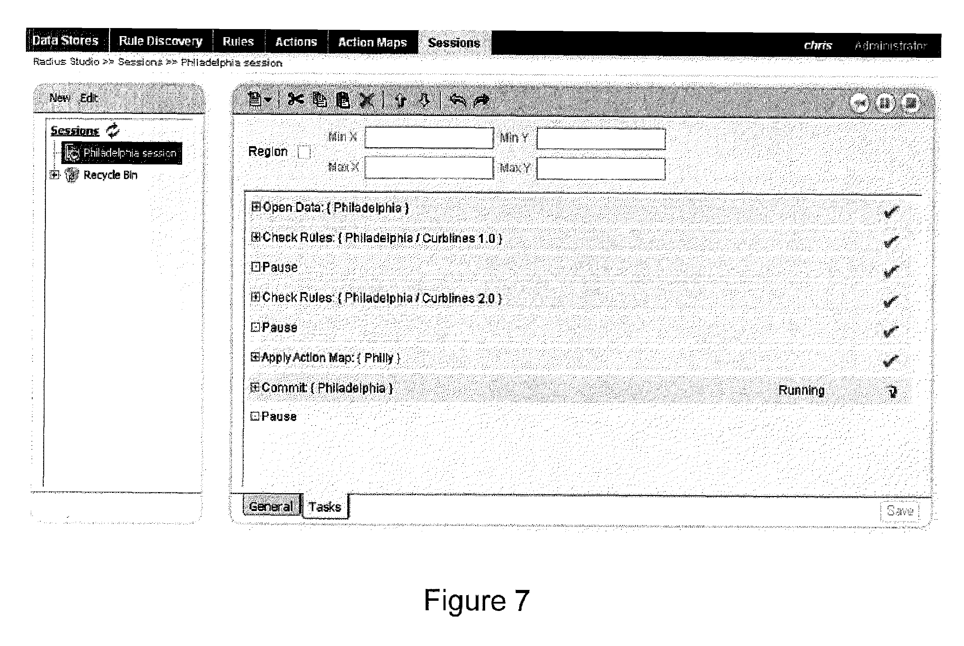

The Sessions interface (Figure 7) allows the construction of an ordered sequence of tasks to process data. Task types are:
- Open Data, which enables access to data from a defined data source. A session may choose to open data from a number of data sources and then check rules based on relationships between features stored in different locations.
- Discover Rules, which analyses data based on a discovery specification to identify candidate rules.
- Check Rules, which checks a defined set of rules on the data and reports non-conformances. It is also possible to publish conformance checking results to a catalogue server (e.g. INdicio from Galdos Systems Inc). Metadata consists of data quality items (qualitative and quantative metrics) and is encoded in a standard form (TC211 ISO XML - 19139).
- Apply Action, which applies one or more actions to the data.
- Apply Action Map, which checks a set of rules defined in an action map and applies the associated action to each non-conforming object.
- Commit Data, which will incrementally commit any data changes back to the data store it came from. Typically this is after a correcting action has been applied by an action or action map.
- Copy to... which will copy data to a different data store.
- Pause, which requests the system to suspend processing to allow results to be examined before processing the next task..

The interface allows tasks to be added, deleted and reordered and for all required parameters to be browsed and updated. Multi-level undo / redo may be used to correct mistakes. Media player style controls are used to run tasks:

The play button starts a task or resumes a paused task.
The pause button suspends execution of a task.
The rewind button rewinds the most recent task performed.
The stop button discards all data and results and rewinds to the start of the first task.

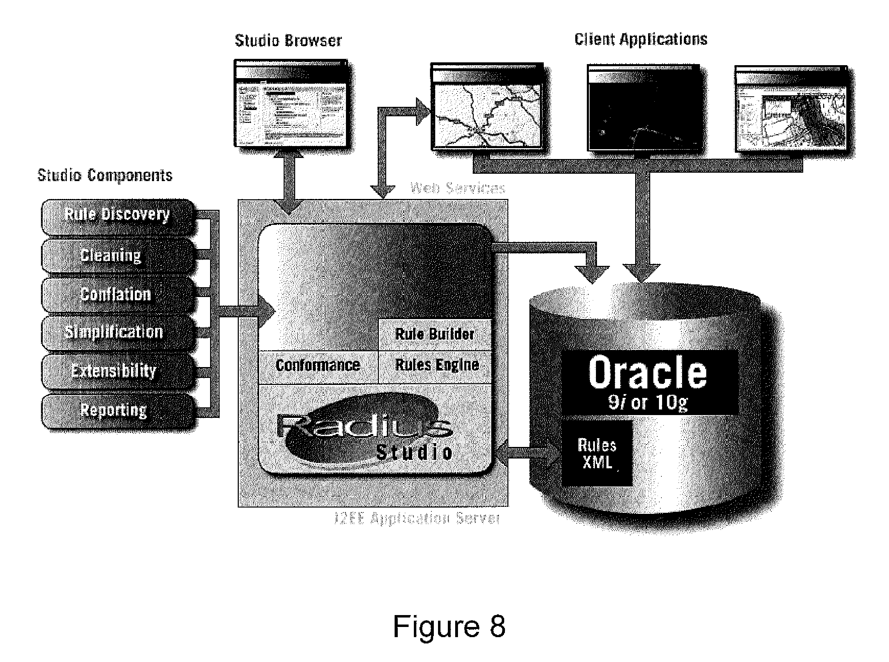

Figure 8 illustrates a simplified view of the system architecture in an exemplary embodiment of the present invention.

The system may be built using the J2EE enterprise application platform, which provides a scalable, location transparent platform to all applications that run within it. An organisation may deploy end-user applications from a range of vendors across the organisation to enable use of best-of-breed solutions. An enterprise Oracle database is used to provide a robust, reliable, secure and scalable repository, enabling all the departments to share data. The Oracle spatial type, SDO_GEOMETRY is used to store spatial data in an interoperable format. Radius Studio works with this data to provide spatial data quality management and enhancement services across the organisation.

The interface to system may be standard: the Microsoft Internet Explorer web browser or ISO19119 web services. The client system requires no additional plug-ins, applets or other software components. The web page is presented using standard HTML, CSS and JavaScript. It communicates with a web server layer via XML. Java Server Pages on the web server use an EJB API running in the application server to store persistent metadata and carry out processing tasks. The web services API provides external access to all this application server functionality.

All system metadata is stored in an Oracle database which could be a different database to the spatial data store.

The Rule and Action module may provide a framework for defining and executing rules and actions on a spatial object dataset. Rules and actions are represented by a rule tree which contains a set of nodes, each of which falls into one of the following four categories:
1. A value node, which represents some value, possibly a fixed value, or a value read from an attribute of an object, or a value derived in some way from one or more other values.
2. A relation node, which represents a boolean binary relationship between two values, such as equals or overlapping.
3. A predicate node, which represents a query predicate or some more general predicate.
4. An operation node, which represents an operation to be performed as part of an action, such as modifying an attribute on an object, performing a built-in operation, or a controlof-flow operation.

Each node may have zero or more parameters and/or child nodes which control the node's behaviour.

The rule/action tree is created and persisted as XML. The schema for this XML is defined here. The structure of the XML exactly matches the structure of the rule/action tree, and the names of the attributes used in the XML match the names of the node parameters. In addition, where possible, the names used in the XML for elements and attributes match the names used in the implementation for Java and JavaScript classes and fields.

Objects in a rule or action are referred to using a class label and an object label. The class label is a single string which identifies the object's class. At runtime it is mapped onto one or more spatial object classes. The class label is optional. If it is omitted (an empty string) then the default is all classes. Otherwise the default is the class with the name given by the class label. The object label is also optional. It serves to uniquely identify the object in the rule (in conjunction with the class label). An object label is only needed when the rule refers to two distinct objects with the same class label (see the examples below).

At the top-level, the rule or action executes in a context which defines a class label and an object label. The class label maps onto objects from one or more classes in the dataset. These are the top-level objects on which the rule or action works.

Nodes in the rule/action tree which execute sub-queries, define additional class and object labels to identify the objects in the sub-query, distinguishing them from the top-level object on which the rule or action is working. Each of these class labels may also be associated with one or more classes at runtime. Each (class label, object label) pair defined must be unique.

Other nodes in the rule/action tree, refer to objects using a reference to a (class label, object label) pair (for example a dynamic value, derived from an object's attribute). In this case, the (class label, object label) reference must match a (class label, object label) pair defined by another node in the tree, which must be an ancestor of the current node.

For example, in the rule "Check for fire_station objects that there is at least one street object for which street.geometry is within 50m of fire_station.geometry".

The top-level context for the rule defines the class label fire_station, but does not define an object label. The top predicate of the query is an existence predicate which performs a subquery for street objects. It thus defines the class label street, but no object label. This predicate has a relational predicate as a child which compares the two dynamic values street.geometry and fire_station.geometry. Each of these dynamic values uses a class label reference to refer to the required object. The structure of the rule tree for this rule is thus:
Root (classLabel="fire_station" objLabel="")
Existence predicate (qualifier="at least", n=1, classLabel="street" objLabel="") Relational predicate
Dynamic value(classRef="street", objRef="", propName="geometry")
Within distance relation(dist=50m)
Dynamic value(classRef="fire_station", objRef="", propName="geometry")

At runtime, the class labels may be associated with spatial object classes using methods on the Context class (all rules and actions need a Context in which they are executed). For example:
fire_station -> "Fire Station"
street -> "A Road", "B Road" and "Misc Road"

This maintains the independence of the rule from the dataset schema, allowing the rule to be run against different datasets simply by setting the appropriate context. By default, if a class label is not explicitly mapped onto spatial object classes, it is assumed that there is a single spatial object class with that name which will be used, or if the class label is the empty string, all spatial object classes will be used.

If the same class (or set of classes) is referred to twice in the same rule, then it is necessary to use object labels, in addition to the class labels, to distinguish the objects in the two classes. For example:
"Check for fire_station objects A that there are at least 5 fire_station objects B for which fire_station:B.geometry is within 10000m of fire_station:A.geometry".
where the object labels A and B distinguish between the top-level object and objects found in the sub-query, both of which have the same class label fire_station and come from the same class or set of classes.

In some rules, the class label may be omitted, meaning that all classes should be considered. For example:
"Check for excl_zone objects that there are no objects X for which X.geometry intersects excl_zone.geometry and class(X) ≠'excl_zone'".
where the sub-query is executed over all objects (except exclusion zones). In this rule, the top-level object has classLabel="excl_zone" and objLabel="". The object in the sub-query has classLabel="" and objLabel="X".

The following types of value node may be available:
Null Value: a value which always evaluates to null.
Static Value: a fixed value which does not change. This may be a boolean, an integer, a real (floating point) number or a literal string.
Dynamic Value: a dynamic value evaluated by getting the value of an attribute from an object. The object is specified by a reference to a (class label, object label) pair, which must be defined by an ancestor node in the tree.
Object Value: an object value which may refer to an actual object or a value of simple or complex type from an array or reference property. The object is specified by a reference to a (class label, object label) pair, which must be defined by an ancestor node in the tree. For an array of simple types, this may refer to an element of the array, in which case the class label should be omitted or left blank. In this case, the object label should not be blank. For an array of complex types, the class label should identify the inner class defining the complex types, and the object label is optional.
Class Value: a value evaluated by returning the class name of an object. The object is specified by a reference to a (class label, object label) pair, which must be defined by an ancestor node in the tree.
Nested Property Value: a value evaluated by drilling down to a particular value within another value which should be of a complex type. The path to the value to be extracted is specified by a sequence of <ValuePath> XML elements which, unlike all other XML elements appearing in a rule or action, do not correspond to nodes in the rule/action tree. Each value path element has a single attribute propName which is the property to extract next from the complex type.
Array Element Value: a value evaluated by taking a particular element from an array. The first child of this node should be a value which is an array. The second child should be an integer valued value specifying a 0-based index into the array. For multidimensional arrays, additional integer valued children may be specified as additional index lookups within the arrays.
Built-in Function Value: a value evaluated by applying a built-in function to one or more arguments. The arguments to the function are the children of this node, which must be value nodes.
Aggregate Value: a value evaluated by applying a built-in aggregator function to one or more arguments, over the set of objects that match the specified sub-query predicate. The objects in the sub-query are identified by the specified (class label, object label) pair.
Negated Value: a value evaluated by inverting the sign of a child value.
Summed Value: a value evaluated by adding together two or more child values.
Difference Value: a value evaluated by subtracting the second child value from the first.
Product Value: a value evaluated by multiplying together two or more child values.
Division Value: a value evaluated by dividing the first child value by the second.
Modulus Value: a value evaluated by computing the remainder after dividing the first child value by the second.
Conditional Value: a value evaluated conditionally based on the specified predicate. If the predicate evaluates to true then the first child value is returned. Otherwise the second child value is returned.
Temporary Value: a value which may be used in an action (not a rule) to hold a piece of data for temporary use, in a similar manner to a variable in a programming language. The temporary value may have a scope which is either local (the value is reset to null each time the action is applied to a new object) or global (the value is only reset to null when a session is run).

Relations are simple comparison operators which may be used to compare two values. They are only used in relational predicates (see below). The following types of relations may be available for comparison of simple values: Equal, Not equal, Less than, Less than or equal, Greater than, Greater than or equal.

The following relations may also be available for string comparisons: Begins with, Ends with, Contains, Regular expression match.

The following relations may be available for geometric comparisons: Equal, Disjoint, Intersect, Touch, Overlap, Cross, Within, Contain, Within distance, Beyond.

All relation nodes have no parameters, except for:
- within distance and beyond relations have a single parameter: distance.
- regular expression relations have a reType parameter which may be either "pcre" (Perl Compatible Regular Expression, the default) or "wildcard" (for like queries). For wildcard queries, the optional parameters oneChar and anyChars specify the wildcard characters to use. These default to "?" and "%".

All relation nodes have no child nodes.

Predicates may be viewed as boolean test conditions. All predicates have a testObject() method which returns true or false depending on whether or not the current object matches the predicate condition. In addition, predicates have iterator methods to allow all objects that satisfy the predicate condition to be traversed.

The following types of predicate may be available:

The root predicate is a special type of predicate, used as the root node of a rule. It defines a class label and an object label, used to identify the top-level objects which the rule is applied to. It has exactly one child node which is another type of predicate defining the rule condition. The root predicate cannot be used anywhere else in the rule tree, other than at the top.

Relational Predicate: a predicate evaluated by comparing two values using a specific relation.

Referential Predicate: a predicate which tests whether two objects are related to one another via a specified reference. The two objects are specified by references to (class label, object label) pairs which must be defined by ancestor nodes in the tree.

Range Predicate: a predicate evaluated by testing whether a value lies in the range between two other values.

And Predicate: a predicate which evaluates to true if all of its child predicates evaluate to true.

Or Predicate: a predicate which evaluates to true if any of its child predicates evaluate to true.

Not Predicate: a predicate which evaluates to true if its child predicate evaluates to false, and false if its child predicate evaluates to true.

Conditional Predicate: a predicate which conditionally evaluates one of its child predicates. If the first predicate is true, then the final result is the result from the second predicate. Otherwise, it is the result from the third predicate, or true, if the third predicate is omitted.

Existence Predicate: a predicate which tests for the existence or absence of objects matching another predicate, by performing a nested sub-query on that predicate. The objects in the sub-query are identified by the specified (class label, object label) pair. The qualifier for the existence/absence may be "at least", "at most" or "exactly", for example "check that there are at least 3 house objects for which...." This predicate is represented textually as a string of the form "[check that] there {is/are} <qualifier> <n> <classLabel> object(s) <objLabel> for which <queryPred>".

For All Predicate: a predicate which performs a nested sub-query to find all objects which match the first child predicate, and checks that each one also satisfies the second child predicate. The objects in the sub-query are identified by the specified (class label, object label) pair. This predicate is represented textually as a string of the form "[check that] for all <classLabel> objects <objLabel> for which <queryPred>, <checkPred>".

Chain Predicate: a predicate which tests whether there is a chain of objects linking two other objects (the seed and target objects) via the child predicate. Within the chain, the previous object in the chain may be referred to using the prior label, and the next object link in the chain to be found should be referred to using the post label. All the objects in the chain share a single class reference. Optionally, a limit may be set on the allowed length of the chain. This predicate is represented textually as a string of the form "[check that] <classRef>:<objRefTarget> chains from <classRef>:<objRefSeed> connected by <connectPred>".

Element Existence Predicate: a predicate which is similar to the exists predicate, this tests for the existence or absence of elements within a collection that match the child predicate. The collection is specified by the first child value, and may be an array or a collection of database objects (for example, a reference property). Individual elements in the collection are identified by the specified (class label, object label) pair as they are tested. For a collection of simple types, or objects of unspecified class, the class label may be omitted. Otherwise it specifies the type of object in the collection. This predicate is represented textually as a string of the form "[check that] there {is/are} <qualifier> <n> <classLabel> element(s) <objLabel> in <collection> for which <checkPred>".

For All Elements Predicate: a predicate which checks that all elements in the collection defined by the child value satisfy the child predicate. The collection may be an array or a collection of database objects. Individual elements in the collection are identified by the specified (class label, object label) pair as they are tested. For a collection of simple types, or objects of unspecified class, the class label may be omitted. Otherwise it specifies the type of object in the collection. This predicate is represented textually as a string of the form "[check that] for all <classLabel> elements <objLabel> in <collection>, <checkPred>".

Nearest Predicate: a predicate which tests whether a specified object is one of the nearest objects to a specified geometry, possibly satisfying an additional condition. This is done by performing a nearest neighbour search, optionally checking the additional test condition, and collecting the objects returned until the required number have been found. The predicate evaluates to true if the object being tested is in this collection of matching nearby objects. This predicate is represented textually as a string of the form "[check that] <classRef:objRe> is {the/one of the <n>} nearest <class-Ref:objRef> object(s) to <geom> [within a distance of <dist>] [for which <queryPred>]".

Operation nodes are used to build up actions which typically modify objects in the dataset, in a similar manner to process methods. The following types of operation may be available:

The root operation is a special type of operation node, used as the root node of an action. It defines a class label and an object label, used to identify the top-level objects which the action is applied to. It has exactly one child node which is another type of operation defining the action to be applied to the objects. The root operation cannot be used anywhere else in the action tree, other than at the top.

Assignment Operation: an operation which assigns the value of the second child to the first child value, which should be either a dynamic value (so that an attribute on an object is modified) or a temporary value

Built-in Operation: a built-in operation which is applied to the current object, using the arguments specified.

Conditional Operation: an operation which tests the specified predicate and applies the specified child operation if the predicate returns true. Optionally it applies the second specified child operation if the predicate returns false.

Sequence Operation: an operation which applies a sequence of child operations in turn.

While Loop Operation: an operation which applies the specified child operation repeatedly while the specified predicate condition returns true.

For Predicate Operation: an operation which applies the specified child operation to some or all of the objects which match the specified sub-query predicate. This operation is represented textually as a string of the form "For {all/the first/the first <n>} <classLabel> object(s) <objLabel> for which <queryPred>, <operation>".

For All Elements Operation: an operation which applies the specified child operation to all the elements of the specified child value, which should be a collection (either an array or a collection of database objects). This operation is represented textually as a string of the form "For all <classLabel> elements <objLabel> in <collection>, <operation>".

Break Operation: this operation stops the execution of the current loop or top-level operation.

Report Operation: this operation reports on the values of one or more values (child value nodes). The report output information is set on the Context object. The scope may be either "per-object" or "at-end" (in which the reported values are intended to be some sort of cumulative values to be reported once only, at the end of the run). The Rule and Action module itself ignores the scope field and produces a report object for each object that the action is applied to, since it does not know which one is the last one. It is the caller's responsibility to determine what to do with the report objects produced. The label is used to uniquely identify the reported values, so each report operation in an action should have a unique label, to avoid them over-writing each other.

Create Object Operation: this operation creates a new object with no properties. The (optional) child operation may refer to the object via the (class label, object label) pair in order to set properties on the new object.

Delete Object Operation: this operation deletes an object specified by a reference to a (class label, object label) pair.

A number of built-in functions may be provided for use by the built-in function value node. They operate on one or more values (child value nodes) and return another result value.

### Conversion Functions

latitude_string() - convert a real number holding a latitude value in degrees, to a formatted string (wrapper for goth_sprint_coord()).
latitude_value() - convert a formatted string representing a latitude value to a real number holding the latitude in degrees (wrapper for goth_sscanf_coord()). longitude_string() - convert a real number holding a longitude value in degrees, to a formatted string (wrapper for goth_sprint_coord()).
longitude_value() - convert a formatted string representing a longitude value to a real number holding the longitude in degrees (wrapper for goth_sscanf_coord()). to_degrees() - convert an angle in radians to degrees.
to_integer() - convert a string to an integer.
to_radians() - convert an angle in degrees to radians.
to_real() - convert a string to a real number.
to_string() - convert a boolean or a number to a string.

### Mathematical Functions

abs()
acos()
asin()
atan()
atan2()
ceil()
cos()
exp()
floor()
is_infinite() - test whether a number is infinite.
is_NaN() - test whether a number is undefined.
log()
log10()
max() - maximum of an arbitrary number of values.
min() - minimum of an arbitrary number of values.
pow() - raise one number to the power of another.
round()
sin()
sqrt()
tan()

### Bitwise Functions

bit_and()
bit_not()
bit_or()
bit_shift()
bit_xor()

### String Functions

format() - wrapping sprintf().
index_of()
length()
re_scarch() - return first sub-string matching a regular expression.
re_subs_all() - replace all occurrences of a regular expression with another string.
re_subs_first() - replace the first occurrence of a regular expression with anther string.
substring()
to_lowercase()
to_uppercase()

### Geometric Functions

area() - of an area geometry.
buffer()
convex_hull()
difference() - between two geometries.
distance() - shortest distance between 2 geometries.
douglas_peucker() - smooth a geometry using the Douglas Peucker smoothing algorithm.
drag_vertex() - move a vertex on a geometry, dragging the other vertices on the geometry with it, using scale and rotate.
end_of() - a line.
ends_of() - both ends of a line (possibly complex).
get_point() - representative point on a geometry.
has_kickbacks()
has_small_rings()
has_spikes()
height() - of a 3D geometry at a particular point.
intersection() - of an arbitrary number of geometries.
is_closed() - test if a line is closed.
is_downhill() - test if a 3D line goes downhill.
is_level() - test if a 3D line is flat (constant z).
is_uphill() - test if a 3D line goes uphill.
line_length() - of a line.
max_height() - maximum z value of a 3D geometry.
mbr() - of an arbitrary number of geometries.
min_height() - minimum z value of a 3D geometry.
move_vertex() - move a vertex on a geometry, without changing any of its other vertices.
offset() - offset a geometry by a some x and y values.
outer_ring() - of an area.
perimeter() - of an area.
remove_duplicates() - fix a broken geometry by removing duplicate vertices.
remove_kickbacks()
remove_small_rings()
remove_spikes()
reverse_line()
similarity() - return a measure of how similar two geometries are to one another. start_of() - a line.
transform_space() - transform a geometry from one named space to another.
union() - of an arbitrary number of geometries.

### Built-in Aggregate Functions

The following functions may be implemented which may compute the aggregate of some value over the set of objects returned by some sub-query:
all_distinct() - test if all the values are distinct.
all_same() - test if all the values are the same (a more optimal way of doing
count_distinct() ==1).
avg() - average value.
count() - count of objects, or count of non-null values.
count_distinct() -count of distinct groups of the specfied value or values.
intersection() - of geometries.
max()
mbr() - of geometries.
min()
sum()
union() - of geometries.

Both rules and actions (and hence all the nodes described above) may have a toString() method which will return a natural language description of the rule or action. This may be in the format of the textual descriptions given above. In order to produce unambiguous text for rules and actions, and possibly to allow such text to be parsed in the future, the following order of precedence will apply to the text. These are based on the C/C++ operator precedence.
1 Simple tokens NullValue, StaticValue, TemporaryValue, BreakOperation
2 Grouping ()
Dereferencing DynamicValue, ClassValue, ObjectValue, NestedPropertyValue,
ArrayElementValue
Function calls BuiltinFnValue, AggregateValue, BuiltinOperation, ReportOperation,
CreateObjectOperation, DeleteObjectOperation
3 Unary operations NegatedValue, NotPredicate
4 Multiplication ProductValue
Division DivisionValue
Modulus ModulusValue
5 Addition SummedValue, DifferenceValue
6 Comparisions All Relations, RelationalPredicate, ReferentialPredicate, RangePredicate
7 Logical AND AndPredicate
8 Logical OR OrPredicate
9 Conditional ConditionalValue, ConditionalPredicate, ExistsPredicate, ForAllPredicate, ElementExistsPredicate, ForAllElementsPredicate, ChainPredicate, NearestPredicate
10 Assignment AssignmentOperation
11 Control of flow ConditionalOperation, WhileLoopOperation, ForPredicateOperation, ForAllElementsOperation
12 Sequential SequenceOperation

The Rule and Action module may have built-in support for 3D (or 2.5D) geometries. Within a rule or action, if a dynamic value refers to the "geometry" property of an object, and other parts of the rule indicate that a 3D geometry is actually needed, then the dynamic value will automatically retrieve the "3d_geometry" property from the object instead. This is designed to work automatically so that when rules or actions are written, there is no need to refer directly to "3d_geometry". This automatic process of using 3D geometries instead of 2D geometries occurs when the rule or action uses a built-in function which explicitly requires a 3D geometry (any builtin function implementing the BuiltinFn3D interface), or if an action assigns a geometry to a dynamic value of an object which is defined to be 3-dimensional. Otherwise the 2D geometry will be used throughout the rule or action even if the classes involed are 3D. The support for 3D may be limited in the following ways:

The spatial operators used in relations involving geometries only work with 2D geometries. If they are supplied with a 3D geometry, they will automatically take its 2D component.

A number of the built-in functions and aggregate functions do not support 3D geometries. If they are supplied with a 3D geometry, they will automatically take its 2D component. In each case, any function which does not fully support 3D geometries will have this limitation documented. Otherwise it will be assumed that the function works properly with 3D geometries.

No doubt many other effective alternatives will occur to the skilled person. Whereas the present invention has been described with respect to specific embodiments thereof, it will be understood that the invention is not limited to the described embodiments and encompasses modifications apparent to those skilled in the art lying within the spirit and scope of the claims appended hereto.

## Claims

1. A system to enable a user to validate data in a database of geometric objects defining spatial data, the system comprising:
an interface for said database of geometric objects;
a data store storing a data schema, executing rules of said data schema defining allowed formats for a rule tree having a set of nodes defining a rule; and
a graphical user interface (GUI) to enable a user to build one or more said rules for operating on said database of geometric objects by displaying a graphical representation of said rule tree.

2. A system as claimed in claim 1 wherein said data schema defines categories for said nodes, said categories comprising value, relation, and predicate categories, a node having a said value category having an associated set of allowed value types, a node having a said relation category having an associated set of allowed relation types, and a node having a said predicate category having an associated set of allowed predicate types.

3. A system as claimed in claim 2 wherein said categories further comprise an operation category, a said node having a said operation category having an associated set of allowed operations, and wherein said GUI enables said user to define an action comprising a said operation to be performed on said geometric objects.

4. A system as claimed in claim 1, 2 or 3 wherein said GUI is configured to use said schema, and when dependent on claim 2, said node categories defined by said data schema restrict building of an invalid said rule by said user.

5. A system as claimed in any preceding claim wherein said system is further configured to generate processor control code for implementing said one or more rules.

6. A system as claimed in any preceding claim wherein said GUI is configured to display a natural language representation of a said rule.

7. A system as claimed in claim 6 when dependent on claim 5 wherein said GUI is configured to generate said natural language representation of a said rule from said processor control code.

8. A method of building a rule for filtering a dataset of spatial objects in a spatial object database, each spatial object having one or more attributes and a value associated with each attribute, said rule comprising a tree of nodes comprising value nodes, relation nodes and predicate nodes, the method comprising:
selecting a root node from a root node menu, said root node comprising a predicate node identifying a dataset of spatial objects within said database for said rule to operate on;
selecting a predicate node from a predicate node menu, said predicate node defining a condition for testing against each spatial object of said dataset to filter said dataset; and
selecting one or more of value nodes, relation nodes and further predicate nodes from node menus to define values of said attributes, relations between values and/or further conditions for said testing according to rule semantics.

9. A method of building an action for modifying a dataset of spatial objects in a database of spatial objects, each spatial object having one or more attributes and a value associated with each attribute, said action comprising a tree of nodes comprising value nodes, relation nodes, predicate nodes and operation nodes, the method comprising:
selecting a root node from a root node menu, said root node comprising a predicate node identifying a dataset of spatial objects within said database for said modifying to operate within;
selecting a predicate node from a predicate node menu, said predicate node defining a condition for testing against each spatial object of said dataset to filter said dataset;
selecting one or more of value nodes, relation nodes and further predicate nodes from node menus to define values of said attributes, relations between values and/or further conditions for said testing according to rule semantics; and
selecting an operation node from an operation node menu, said operation node defining a target attribute of each spatial object and a modification value for said target attribute, for modifying said dataset of spatial objects.

10. Computer program code comprising instructions to control a processor, when running, to carry out the method of claim 8 or 9.

11. A computer readable medium carrying the computer program code of claim 10.

12. A user interface for building a rule operable on a database of spatial objects, said rule having a tree structure comprising a root node and one or more child nodes, said user interface comprising:
a first menu for selecting a root node of said rule corresponding to a dataset of spatial objects within said database;
a second menu for selecting a predicate node from a plurality of predicate nodes operable on a selected root node; and
means for providing further menus for selecting child nodes responsive to nodes already selected in accordance with rule semantics.
